# EUROPEAN PATENT APPLICATION

(11) **EP 2 365 419 A2**
(43) Date of publication of application: **14.09.2011**
(21) Application number: 11001881.9
(22) Date of filing: 07.03.2011
(51) Int. Cl.: G06F 3/01

(54) **Wearable data input device**

(30) Priority: 05.03.2010 US 718331
(71) Applicant: Bajramovic, Mark, Montreal QC H2T-2T4 (CA)
(72) Inventor: Bajramovic, Mark, Montreal QC H2T-2T4 (CA)
(74) Representative: von Rohr, Hans Wilhelm

(57) **Abstract**

Disclosed is a wearable data input device. A garment to be worn on a user's hand includes at least one digit portion for receiving a corresponding digit of the user's hand; a palmar portion; and a dorsal portion. A plurality of contact sensors includes at least one sensor on each digit portion of the garment. Each contact sensor is configured to detect contact between a corresponding portion of the user's hand and another object, and to generate contact signals in accordance with the detected contact. A surface movement sensor detects 2-dimensional (2-D) movement of the user's hand across a surface, and generates corresponding 2-D movement signals in accordance with the detected movement. A consol is configured to receive signals from each sensor, and to selectively transmit the received signals to a computer. It is preferred that at least the consol is selectively removable from the garment. In a further preferred aspect of the invention there is provided at least one motion sensor for detecting 3-dimensional (3-D) motion of the user's hand, and for generating 3-D motion signals in accordance with the detected motion. If only a motion sensor for detecting 3-D motion of the hand is provided, it is preferred that the consol is operative also in a 2-D mode.

## Description

This application is based on prior art of publications US 200610033710 A1 and US 200310137489 A1, both based on inventions of the same inventor. The entire content of both publications mentioned before are hereby incorporated herein by reference.

A mouse is a peripheral data input device used to control the location of a cursor on a video display connected to the computer, and to trigger various software processes of the computer. Typically, cursor location is controlled by movement of the mouse across a surface. The mouse includes a tracking device for measuring the movement of the mouse across the surface, and generating corresponding movement signals. These movement signals are input to the computer where it is translated into a corresponding movement of the cursor on the display. Several different tracking devices are known and used.

In addition, there are typically two or three buttons on the mouse for triggering software processes of the computer. For example, pressing and/or releasing a mouse button causes corresponding switch signals to be sent to the computer. Typically, these switch signals are used (either alone or in combination with movement signals from the tracking device) to activate a software process such as a function or command of a Graphical User Interface (GUI), or a software feature of an Application program, such as highlighting text in a word processor application, for example.

Many attempts have been made to design an easy to use computer mouse, which is ergonomically synchronized with the human form. Those attempts have generally been unsuccessful because the human hand comes in many shapes and sizes. Therefore, one size of computer mouse certainly does not fit all hand sizes. The result has been increasing incidents of carpal tunnel syndrome amongst mouse users as they struggle to conform their hands to the currently available designs.

The first computer mouse (the Engelbart mouse) was designed by a group of 17 researchers headed by Douglas C. Engelbart at the Stanford Research Institute in 1968. The Engelbart mouse was a handheld mobile device that used a combination of hardware and software to translate physical movements of a tracking device across a flat horizontal surface into digital signals to control movement of a cursor on a video display. Engelbart's design caused the user to orient his hand in a palm down posture on top of the mouse, with the hand and wrist arched upwardly. This hand posture proved to be the most popular amongst test groups and was the first to set the industry standard for the commercial computer mouse. The Engelbart design is used as the platform for all top selling computer mice and is the basis for many of the so-called "ergonomic" mouse product lines. Despite its commercial success, however, the Engelbart design places the user's hand and wrist in a "strained posture", which causes excessive pressure on the hand, arm, and carpal tunnel of the wrist, and with repeated or prolonged use can result in repetitive stress injuries ("RSI"'s).

Repetitive stress injuries are a group of injuries occurring from a series of small repeated traumas. By themselves, none of these injuries causes permanent damage. However, when these movements are repeated hundreds or thousands of times, such as with standard mouse or keyboard movements, they often place unnecessary stress on the tendons and nerves of the hand, wrist, arm, shoulder, and neck resulting in debilitating pain, and loss of sensation. Carpal Tunnel Syndrome ("CTS") is the most common RSI afflicting computer users today. CTS results from the pinching of the median nerve within the carpal tunnel of the hand, causing discomfort and numbness. The carpal tunnel is an opening into the hand that is made up of the bones of the wrist on the bottom and the transverse carpal ligament on top. Through this opening, the median nerve and the flexor tendons pass through into the hand. When abnormal pressure is placed on this area of the wrist, such as is caused by a conventional ergonomic mouse, this area can swell, pinching the nerve.

The problem with the standard Engelbart mouse design is that it requires a user to orient his hand in an unnatural upwardly arched posture known as the strained hand posture, In the strained hand posture, the weight of the user is not dispersed, but is concentrated on a small area located around the carpal tunnel of the wrist. As noted above, this can result in a pinching of the median nerve within the carpal tunnel causing discomfort and numbness. Moreover, if the user tenses his muscles at 20% of maximum, blood flow to the area is reduced by 80%. Most of today's commercially successful "ergonomic mice" are based on this design and thereby cause unnatural strain during use. It is this strain coupled with prolonged use that often results in the development of debilitating RSIs.

It would therefore be advantageous to design a computer mouse that required the user to keep her hand and wrist in a neutral hand posture during use, which is the posture that places the least amount of stress on the muscles and tissues of the hand, wrist, arm, and neck. In this neutral hand posture, the user's hand and wrist remain in a flatter, unarched posture, and the individual's weight is evenly dispersed between the hand, wrist, and arm. This posture minimizes the pinching of the median nerve within the carpal tunnel and allows for the greatest amount of blood flow to and from the hand by limiting the amount of flexion, extension and ulnar and radial deviation of the hand and wrist.

In addition to hand and arm strain, one major disadvantage of the conventional mouse design is that users often must spend valuable time searching their desktops to locate the mouse before using it. This disrupts the creative process and hinders both user performance and productivity.

Some attempts have been made to solve these problems by locating a tracking device, such as a track ball or a sensor pad, right on the computer keyboard, but some find these devices awkward to use and difficult to master. Moreover, such devices still require the user to remove his or her eyes from the display to find the exact location of the tracking device. This process can interrupt work flow and reduce productivity.

One solution to these problems is to integrate the functions of a computer mouse with the individual user's hand. A recent attempt to do this is described in U.S, Pat, Nos. 5,444,462, and 6,097,369. They describe a glove to be worn on a user's hand wherein the glove includes micro-switches mounted next to a joint of the index finger and on opposite sides of the wrist. The switches translate up and down movement of the index finger and side to side movement of the wrist into vertical and horizontal movements, respectively, of a cursor on a computer display, Buttons are provided on the other fingers to provide mouse clicking functions and to turn the glove on and off. These buttons are activated by the thumb. Although the device described by Wambach does not require a surface over which a tracking device must be moved, it does require a great deal of skill and considerable practice for the user to be able to control a cursor on a video display with any degree of accuracy. Further, the device must be manually activated prior to use and manually deactivated after use so that hand movements are not inadvertently translated into cursor movements on the screen while the user is typing. Moreover, Wambach's design restricts movement of the hand during operation to small movements of the wrist (side to side), index finger (up and down), and thumb (activating click buttons). This results in reduced blood flow to the hand when compared to other mouse designs which require whole arm movements.

Another recent attempt at a solution is described in U.S. Pat. No. 6,154,199. It describes a hand positioned mouse which includes a glove having a tracking ball supported in a housing attached to the side of the index finger so that the tracking ball can be operated by the thumb. Mouse buttons are positioned on the palm of the glove for activating mouse "click" functions. Transmission means are contemplated for sending signals corresponding to tracking ball movement to the computer. However, Butler makes no provision for using a tracking device that includes an optical sensor or for using a tracking device in contact with a surface. Moreover, Butler's tracking device and mouse "click" buttons do not automatically turn "off" when not in use to permit typing, and do not automatically turn "on" again when required for moving the cursor and performing mouse "clicking" functions. Butler's device also does not include "scrolling" or "paging" functions. Further, Butler's design restricts movement of the hand during operation to small movements of the thumb and fingers required to activate the tracking device the mouse click buttons. This results in reduced blood flow to the hand when compared to other mouse designs which require whole arm movements.

US 2006/0033710 A2 and US 2003/0137489 A1, the entire contents of both of which are incorporated herein by reference, teach a wearable data input device which includes a glove like apparel or garment to be worn on a user's hand, the garment including: at least one digit portion for receiving a corresponding digit of the user's hand; a palmar portion; and a dorsal portion. A plurality of sensors are affixed to the garment at various locations and connected to a transmitter which operates to selectively transmit signals from the sensors to a computer, The sensors include a tracking device configured to generate movement signals in accordance with movement of the tracking device across a surface, and a pressure plate designed to generate switching signals. The movement signals are used for controlling movement of a cursor in a video display of the computer and the switching signals are used for controlling mouse clicking and scrolling functions.

Advantageous features of the arrangement of US 200610033710 A1 include;
(a) The computer mouse conforms directly to the user's hand and does not require the user to conform his or her hand to the mouse. This enables the user's hand and wrist to maintain a neutral posture during use, which reduces strain, prevents injury (such as Carpal Tunnel Syndrome and other related repetitive stress injuries), and increases productivity,
(b) Some embodiments of the wearable computer mouse permits a user to type on a keyboard with all fingers while wearing the glove.
(c) The wearable computer mouse automatically activates when the tracking device is placed in contact with a surface allowing the user to move the cursor or use the mouse "click" functions and will automatically deactivate when a user desires to resume typing.
(d) The wearable computer mouse can be manufactured in accordance with different hand sizes, and the use of a stretch fabric and an adjustable wrist strap permits easy accommodation of a wide range of hand and finger sizes.
(e) The wearable computer mouse includes padding on the palmar side of the glove, which will help to minimize user strain and maximize performance.
(f) The wearable computer mouse eliminates the need for a user to search for the computer mouse on a desktop before use.
(g) The wearable computer mouse permits a user to control up and down scrolling and paging functions without having to remove the user's hands from the computer keyboard.

A limitation of conventional computer mice is that they are inherently 2-dimensional data input devices. In particular, the tracking device is designed to measure movement of the mouse across a 2-dimensional surface, and the resulting movement signals are used to control the location of the cursor in a 2-dimensional coordinate space which normally corresponds with the surface of the computer monitor. Such an arrangement is not readily extendible to enable control of a cursor (or, more generally, a point of focus) in a 3-dimensional coordinate space. Thus, for example, in 3-dimensional virtual environments such as those found in many computer games, a conventional computer mouse is generally insufficient for controlling characters.

It would be desirable to extend the functionality of the wearable computer mouse of US 200610033710 A1 to enable a user to easily control actions in a three-dimensional computing environment, and to enable user-customization of the mouse functions.

In an aspect of the present invention as mentioned in claim 1, there is provided a wearable data input device. A garment to be worn on a user's hand includes at least one digit portion for receiving a corresponding digit of the user's hand; a palmar portion; and a dorsal portion. A plurality of contact sensors includes at least one sensor on each digit portion of the garment. Each contact sensor is configured to detect contact between a corresponding portion of the user's hand and another object, and to generate contact signals in accordance with the detected contact. A surface movements sensor detects 2-dimensional (2-D) movement of the user's hand across a surface, and generates corresponding 2-D movement signals in accordance with the detected movement. A consol is configured to receive signals from each sensor, and to selectively transmit the received signals to a computer. At least the consol is selectively removable from the garment.

Preferred modifications and improvements of this aspect of the invention are the subject matter of independent claims 2 to 9 and further explanations below.

In this aspect of the invention it is preferred that the surface movement sensor is selectively removable from the garment.

Preferably, the device is further comprising a first fitting affixed to the garment for removably receiving the consol;
a second fitting affixed to the garment for removably receiving the surface movement sensor; and
at least one electrical conductor affixed to the garment for electrically connecting the first and second fittings.

Preferably, the device is further comprising a plurality of second fittings such that a user can affix the surface movement sensor to the garment at any one of a plurality of user-selected locations, each second fitting being connected to the first fitting by at least one respective electrical conductor.

Preferred is an embodiment, wherein the at least one contact sensor comprises at least one contact sensor disposed on each digit portion of the garment.

Preferred is an embodiment, wherein the at least one contact sensor includes at least one contact sensor disposed on the palmar portion of the garment.

Preferred is an embodiment, wherein at least one of the contact sensors is non-removably affixed to the garment.

Preferred is an embodiment, wherein at least one of the contact sensors is selectively removable from the garment.

It is further preferably in this aspect of the present invention that the device further comprises a plurality of third fittings affixed to the garment, each third fitting for removably receiving a respective contact sensor, such that a user can affix contact sensors to the garment at any one or more of a plurality of user-selected locations; and
respective electrical conductors affixed to the garment for electrically connecting the console to each one of the third fittings.

Preferred is an embodiment, wherein each third fitting is individually addressable, such that a response of a computer to a contact signal generated by a contact sensor affixed to any given third fitting is user-programmable.

Preferred is an embodiment, wherein the consol comprises:
a transmitter for transmitting signals to the computer; and
a controller configured to:
   detect when the user's hand is positioned to enable detection of 2-D movement across the surface by the surface movement sensor, and control the transmitter to transmit the 2-D movement signals to the computer; and
   otherwise, control the transmitter to transmit no signals to the computer,

Preferred is an embodiment, wherein the transmitter is configured to transmit signals to the computer via a wireless connection or a cable connection.

Preferred is an embodiment, wherein the controller is responsive to a first switch signal to detect when the user's hand is positioned to enable detection of 2-D movement across the surface.

Preferred is an embodiment, wherein the first switch signal is generated by a contact sensor associated with the surface movement sensor, and configured to detect contact between the surface movement sensor and the surface.

Preferred is an embodiment, wherein the first switch signal is generated by a processor for deriving the first switch signal from respective outputs of the surface movement sensor and at least one other contact sensor of the wearable data input device.

It is further preferable in the present aspect of the invention that the device comprises at least one motion sensor for detecting 3-dimensional (3-D) motion of the user's hand, and for generating 3-D motion signals in accordance with the detected motion.

Preferred is an embodiment, wherein the motion sensor comprises a 6-axis accelerometer, and wherein the 3-D motion signals contain information of measured motion and attitude of the of the user's hand.

Preferred is an embodiment, wherein the motion sensor is disposed in the consol.

Preferred is an embodiment, wherein the consol comprises;
a transmitter for transmitting signals to the computer; and
a controller configured to:
   detect when the user's hand is positioned to enable detection of 2-D movement across the surface by the surface movement sensor, and control the transmitter to transmit the 2-D movement signals to the computer;
   detect when the user's hand is positioned for controlling a cursor in a 3-D coordinate system, and control the transmitter to transmit the 3-D motion signals to the computer; and
   otherwise, control the transmitter to transmit no signals to the computer.

Preferred is an embodiment, wherein the transmitter is configured to transmit signals to the computer via a wireless connection or a cable connection.

Preferred is an embodiment, wherein the controller is responsive to a first switch signal to detect when the user's hand is positioned to enable detection of 2-D movement across the surface.

Preferred is an embodiment, wherein the first switch signal is generated by a user-controlled switch.

Preferred is an embodiment, wherein the first switch signal is generated by a contact sensor associated with the surface movement sensor, and configured to detect contact between the surface movement sensor and the surface.

Preferred is an embodiment, wherein the first switch signal is generated by a processor for deriving the first switch signal from respective outputs of the surface movement sensor and at least one other contact sensor of the wearable data input device.

Preferred is an embodiment, wherein the controller is responsive to a second switch signal to detect when the user's hand is positioned for controlling a cursor in a 3-D coordinate system.

Preferred is an embodiment, wherein the second switch signal is generated by a user-controlled switch.

Preferred is an embodiment, wherein the second switch signal is generated by a processor for deriving the second switch signal from at least the first switch signal and an output of the 3-D motion sensor.

Another aspect of the present invention according to claim 10 provides a wearable data input device. A garment to be worn on a user's hand includes at least one digit portion for receiving a corresponding digit of the user's hand; a palmar portion; and a dorsal portion. A plurality of contact sensors includes at least one contact sensor disposed on each digit portion of the garment, Each contact sensor is configured to detect contact between a corresponding portion of the user's hand and another object, and to generate contact signals in accordance with the detected contact. A surface movement sensor is disposed on the garment, to detect 2-dimensional (2-D) movement of the user's hand across a surface, and to generate corresponding 2-D movement signals in accordance with the detected movement. At least one motion sensor is provided for detecting 3-dimensional (3-D) motion of the users hand, and for generating 3-D motion signals in accordance with the detected motion, A consol is configured to receive signals from each sensor, and to selectively transmit the received signals to a computer.

Preferred embodiments and modifications of this aspect of the invention are the subject matter of claims 11 to 13 and further aspects mentioned below.

Preferred is an embodiment, wherein the at least one contact sensor comprises at least one contact sensor disposed on each digit portion of the garment.

Preferred is an embodiment, wherein the motion sensor comprises a 6-axis accelerometer, and wherein the 3-D motion signals contain information of measured motion and attitude of the of the user's hand,

Preferred is an embodiment, wherein the motion sensor is disposed in the consol.

Preferred is an embodiment, wherein the consol comprises:
a transmitter for transmitting signals to the computer; and
a controller configured to;
detect when the user's hand is positioned to enable detection of 2-D movement across the surface by the surface movement sensor, and control the transmitter to transmit the 2-D movement signals to the computer;
detect when the user's hand is positioned for controlling a cursor in a 3-D coordinate system, and control the transmitter to transmit the 3-D motion signals to the computer; and
otherwise, control the transmitter to transmit no signals to the computer.

Preferred is an embodiment, wherein the consol is selectively removable from the garment.

Preferred is an embodiment, wherein the surface movement sensor is selectively removable from the garment.

It is further preferable in the present aspect of the invention that the device comprises a first fitting affixed to the garment for removably receiving the consol;
a second fitting affixed to the garment for removably receiving the surface movement sensor; and
at least one electrical conductor affixed to the garment for electrically connecting the first and second fittings.

It is further preferable in the present aspect of the invention that the device comprises a plurality of second fittings such that a user can affix the surface movement sensor; to the garment at any one of a plurality of user-selected locations, each second fitting being connected to the first fitting by at least one respective electrical conductor.

Preferred is an embodiment, wherein at least one of the contact sensors is selectively removable from the garment.

It is further preferable in the present aspect of the invention that the device comprises a plurality of third fittings affixed to the garment, each third fitting for removably receiving a respective contact sensor, such that a user can affix contact sensors to the garment at any one or more of a plurality of user-selected locations; and respective electrical conductors affixed to the garment for electrically connecting the first fitting to each one of the third fittings.

Preferred is an embodiment, wherein each third fitting is individually addressable, such that a response of a computer to a contact signal generated by a contact sensor affixed to any given third fitting is user-programmable.

A further aspect of the present invention according to claim 14 provides a wearable data input device. A garment to be worn on a user's hand includes at least one digit portion for receiving a corresponding digit of the user's hand; a palmar portion; and a dorsal portion. A plurality of contact sensors includes at least one contact sensor disposed on each digit portion of the garment, each contact sensor configured to detect contact between a corresponding portion of the user's hand and another object, and to generate contact signals in accordance with the detected contact. A motion sensor detects 3-dimensional (3-D) motion of the user's hand, and generates motion signals in accordance with the detected motion. A consol is configured to receive signals from each sensor, and to selectively transmit the received signals to a computer, The consol is operative in a 2D mode to process the motion signals from the motion sensor to derive 2-dimentional movement signals representative of 2-dimentional movement of the user's hand relative to a surface, and to transmit the derived 2-D movement signals.

Preferred improvements and modifications of this aspect of the invention are the subject matter of claim 15 and further aspects mentioned below.

In particular it is preferred an embodiment, wherein the at least one contact sensor comprises at least one contact sensor disposed on each digit portion of on the garment,

In particular it is preferred an embodiment, wherein the motion sensor comprises a 6-axis accelerometer, and wherein the motion signals contain information of measured motion and attitude of the of the user's hand.

In particular it is preferred an embodiment, wherein the motion sensor is disposed in the consol.

In particular it is preferred an embodiment, wherein the consol comprises:
a transmitter for transmitting signals to the computer; and
a controller configured to;
detect when the user's hand is positioned to enable detection of 2-dimentional movement, and control the transmitter to transmit the 2-D movement signals to the computer;
detect when the user's hand is positioned for controlling a cursor in a 3-D coordinate system, and control the transmitter to transmit the 3-D motion signals to the computer; and
otherwise, control the transmitter to transmit no signals to the computer.

In particular it is preferred an embodiment, wherein the consol is selectively removable from the garment.

Representative embodiments of the invention will now be described by way of example only with reference to the accompanying drawings, in which:
- FIGs. 1a, 1b: illustrate respective views of a wearable data input device in accordance with an embodiment of the present invention;
- FIG. 2: schematically illustrates principal elements and operations of a wearable data input device in accordance with an embodiment of the present invention;
- HGs. 3a-3c: schematically illustrate representative operations of a signal conditioner usable in embodiments of the present invention;
- FIG. 4: schematically illustrates principal elements and operations of a wearable data input device in accordance with another embodiment of the present invention; and
- FIG. 5: schematically illustrates principal elements and operations of a wearable data input device in accordance with another embodiment of the present invention.

It will be noted that throughout the appended drawings, like features are identified by like reference numerals.

The present invention provides a versatile wearable data input device.

In one aspect, the present invention extends the wearable data input device of above mentioned US-A1-publications by providing a garment to be worn on a user's hand, the garment including: at least one digit portion for receiving a corresponding digit of the user's hand; a palmar portion; and a dorsal portion. A plurality of contact sensors is provided, including at least one contact sensor disposed on each digit portion of the garment, each contact sensor configured to detect contact between a corresponding portion of the user's hand and another object and to generate contact signals in accordance with the detected contact. A surface movement sensor is provided on the palmar portion of the garment, to detect 2-dimensional (2-D) movement of the user's hand across a surface and to generate corresponding 2-D movement signals in accordance with the detected movement, A consol is disposed on the dorsal portion of the garment, the consol being configured to receive signals from each sensor, and to selectively transmit the received signals to a computer.

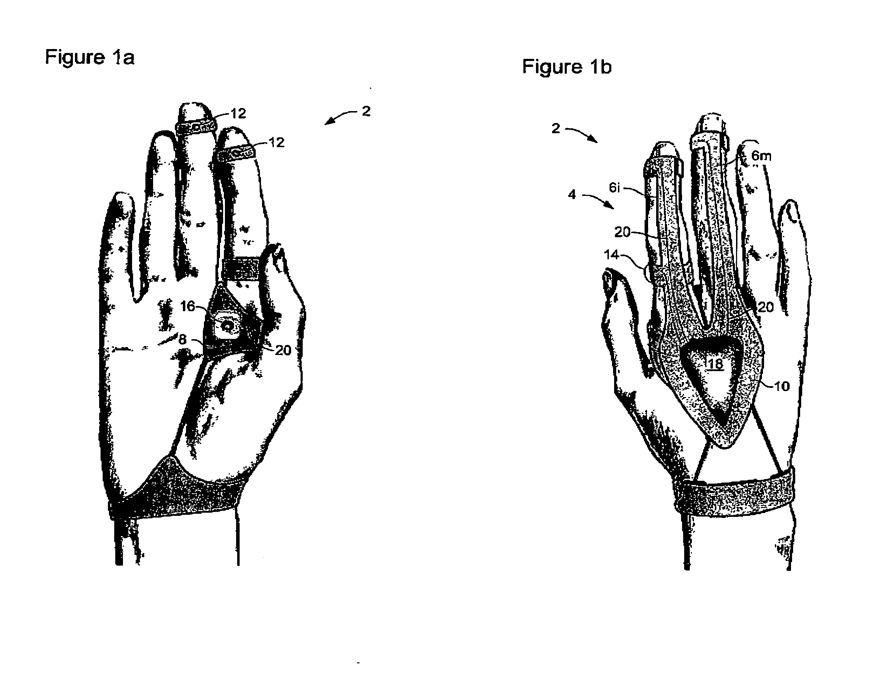

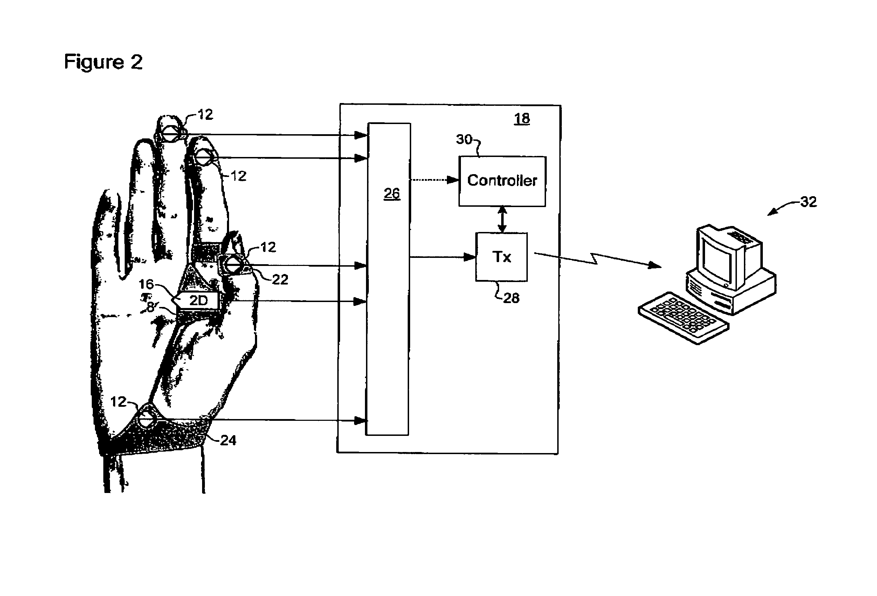

FIGs. 1a and 1b present respective views of a wearable data input device 2 in accordance with one embodiment of the present invention, in which a garment 4 is includes respective digit portions 6i and 6m for each of the index and medial fingers of the user's hand, a palmar portion 8 and a dorsal portion 10. The garment 4 is configured to provide support for a respective contact sensor 12 on each of the index and medial digit portions 6i, 6m; a scroll sensor 14 on the index digit portion 6i; a surface movement sensor 16 affixed to the palmar portion 8 of the garment 4; and a consol 18 mounted on the dorsal portion 10 of the garment 4. Each of the sensors 12, 14 and 16 are connected to the consol 18 via electrical conductors 20 affixed to (or integrated with) the garment 4. This embodiment is suitable for data input functions corresponding that of a conventional 2-button mouse. FIG. 2 shows a second embodiment of the present invention, in which additional contact sensors 12 are respectively mounted on a thumb-piece 22 and a wrist-band 24 of the garment 4, and connected to the consol 18 via respective electrical conductors (not shown). FIG. 2 also schematically shows principal elements and operations of a consol 18 usable with the wearable data input device.

In some embodiments, at least the surface movement sensor 16 and the consol 18 are selectively removable from the garment 4. For example, respective fittings (not shown) may be provided on the palmar and dorsal portions 8, 10 of the garment 4, and interconnected by electrical conductors 20 embedded within (or affixed to) the garment 4. Each fitting is designed to receive a respective one of the surface movement sensor 16 and the consol 18, thereby providing both mechanical support and electrical interconnection between these components. With this arrangement, the surface movement sensor 16 and the consol 18 can be selectively attached and detached from the garment 4 as desired. This arrangement is advantageous in that detaching the surface movement sensor 16 and the consol 18 from the garment 4 enables replacement of a worn garment 4, for example, without the user having to purchase new electronic components of the data input device.

In some embodiments, the garment 4 may also be provided with a plurality of fittings for receiving respective contact sensors 12. With this arrangement, the number and location(s) of contact sensors 12 on the garment 4 can be user-selected, which enables the user to customize the functionality of the wearable data-input device 2.

Provision of a plurality of contact sensors 12 at various locations on the garment 4 (as shown in FIG. 2, for example) provides a wide range of different signal inputs that a user can generate, and so increases the versatility of the data input device 2. Preferably, each contact sensor 12 (or fitting to which it may be connected) is individually addressable, so that a response to each contact sensor 12 (or combinations of contact sensors) can be programmable. This provides the user with a further level of customization of the functionality of their wearable data input device 2.

In general, the contact sensors 12 may be provided as any suitable type of sensor that is capable of detecting contact with another object and generating a corresponding signal. Pressure plates or transducers, mechanical switches, capacitive sensors and opto-electric sensors may be used for this purpose, but the present invention is not limited to these sensor types. Representative signal inputs and functionality of the data input device will be described below.

It is contemplated that the user may wish to perform various actions or tasks, such as use a keyboard or a pen, for example, without removing the wearable data input device 2 from their hand. If contact sensors 12 positioned near the ends of the user's digits (which is very advantageous for implementing mouse-like data input functions) are bulky, they may well interfere with other tasks the user wishes to perform. Accordingly, the contact sensors 12 are preferably configured so as to minimize this interference. In some cases, interference can be reduced by positioning the contact sensors a short distance away from the user's finger-tips. However, from the point of view of ease of implementing mouse-like data input functions, contact sensors are preferably positioned directly under the finger tips, and are designed to cover a significant area. For example, a contact sensor 12 may advantageously cover a significant portion of the a digit-tip of the user's hand, or a lateral aspect of the user's thumb, so that the user does not have to precisely control the exact position of their hand, in order to activate each contact sensor. Accordingly, in the present invention, contact sensors 12 having a minimum thickness are preferred. Still more preferred are contact sensors 12 that are flexible, so that the user can readily activate each contact sensor to perform desired mouse-like data input functions, while minimizing interference with the user's normal feel and dexterity for other tasks. Flexible thin-film pressure sensors known in the art can be used for this purpose, In some embodiments, such pressure sensors may be permanently affixed to the garment 4.

The scroll sensor 14 may be provided as any suitable sensor capable of receiving input from the user and generating an output signal suitable for use in controlling a scroll-function of a computer. Known sensor types which may be used for this purpose include scroll-wheels, pressure sensors and shear sensors, but the present invention is not limited to these sensor types. In the illustrated embodiments, the scroll sensor 14 is mounted on the garment 4 in a position that can be easily reached by the user's thumb. Other locations may be used, as desired. If desired, two or more fittings may be provided on the garment 4, so that the scroll sensor 14 may be attached to the garment 4 at a user selected location.

The surface movement sensor 16 may be provided as any suitable sensor capable of detecting 2-dimensional movement relative to a surface. Known sensor types which may be used for this purpose include track-balls, optical sensors and accelerometers, or combination thereof. In some embodiments, the surface movement sensor 16 is configured to enable the user to precisely position a cursor on a screen for example. Known 2-dimentional track-ball and optical sensor elements are well suited to this purpose. In such cases, the surface movement sensor 16 is preferably secured to the palmar portion 8 of the garment 4 or on a digit portion 6, either directly or via a fitting provided for that purpose. In embodiments in which the surface movement sensor 16 is an accelerometer, it may be convenient to include the surface movement sensor 16 within the consol 18, rather than mounting it on the palmar portion 8 of the garment 4.

In some embodiments, respective fittings may be provided at two or more locations on the garment 4, so that the surface movement sensor 16 can be attached to the garment at a user selected location. For example, in the embodiments of FIGs. 1 and 2, the surface movement sensor 16 is shown located on the palmer portion 8 of the garment 4. If desired, an additional fitting could be provided, for example on the wrist portion 24, to permit the user to attach the surface movement sensor 16 on either the palmer or wrist portions, as desired. In a still further variation, another fitting of the same type may be located on one of the digit portions 6 of the garment 4. As may be appreciated, providing multiple fittings by which the surface movement sensor 16 can be attached to the garment enables the user to position the surface movement sensor 16 at a location which provides a desired level of sensitivity and comfort.

Referring to FIG. 2, the consol 18 generally comprises a signal conditioner 26, a transmitter 28, and a controller 30. In operation, the signal conditioner 26 receives the raw signals from each sensor 12, 14, 16, and passes corresponding sensor input signals to the transmitter 28, which operates under the control of the controller 30 to selectively transmit the sensor input signals to a computer 32. The computer 32 may, for example, be programmed to respond to the sensor input signals received from the consol 18 to control the position of a cursor (or point of focus), and trigger various software functions.

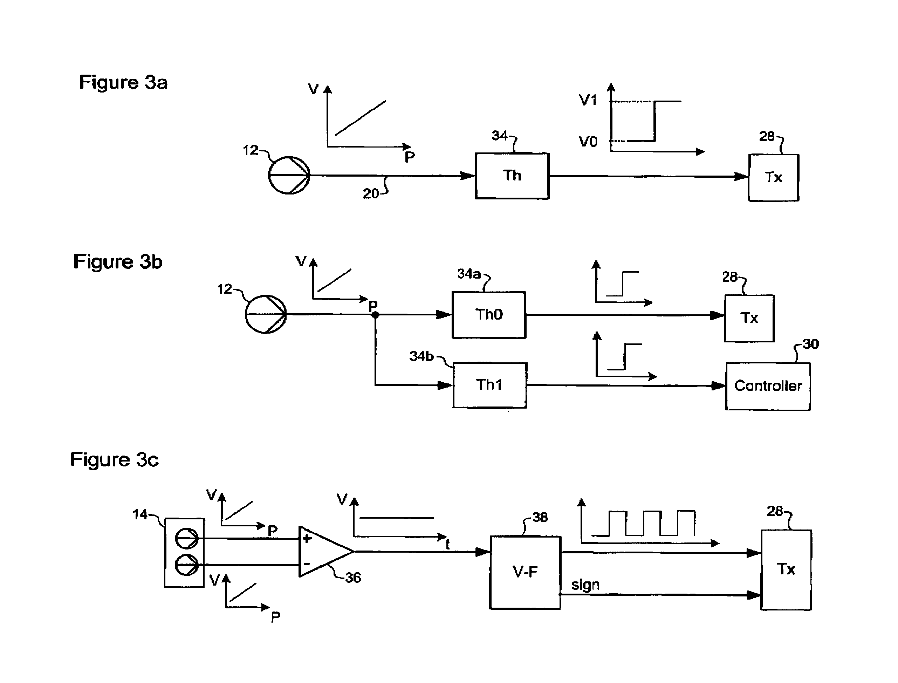

At a minimum, the signal conditioner 26 operates to route signals from each of the sensors 12,14,16 to the transmitter 28. Preferably, however, the conditioner 26 also operates to supply sensor signals to the controller 30 to support enhanced functionality of the wearable data input device 2. In addition, the conditioner 26 may operate to adjust the electrical properties of each sensor signal, as appropriate, to facilitate their transmission and use by the computer 32. For example, pressure sensors known in the art generate an analog signal, the voltage of which is proportional to the magnitude of the pressure. In embodiments which incorporate pressure sensors of this type, the signal conditioner 26 may provide a threshold detector which converts the analog signal into a binary digital signal having voltage levels that suitable for use as mouse button signals, FIG. 3a schematically illustrates a representative arrangement of this type, in which an analog pressure sensor generates a respective analog sensor signal, which is supplied to a threshold detector 34 of the signal conditioner 26. The output of the threshold detector 34 is a binary signal having two voltage states V0 and V1, which respectively correspond to binary "0" and binary "1" states. The respective threshold level applied by the threshold detector 34 may be selected to enable the user to easily generate binary signal states corresponding to "button release" and "button press" mouse functions, for example, while at the same time preventing spurious signals from being generated when the user is simply resting their hand on a surface. The particular voltage levels of the V0 and V1 voltage states will normally be selected for compatibility with at least the transmitter 28, to facilitate transmission to the computer 32. Various well known electronic devices may be used to implement the threshold detector 34 including, but not limited to operational amplifiers. The arrangement of FIG. 3a is beneficial in that it enables analog contact sensors 12 to be used to generate data input signals that are directly analogous to the button signals of a conventional mouse, and can be transmitted to the computer 32 for use in an identical manner.

Alternative threshold detection arrangements can be designed, as desired, to provide additional functionality. For example, FIG. 3b illustrates a possible embodiment in which a pair of threshold detectors 34 are provided, each of which applies a respective different threshold level. For example, one of the threshold detectors 34a may operate in a manner substantially identical to that described above with reference to FIG. 3a, and so generate a binary signal that is directly analogous to a button signal of a conventional mouse. The other threshold detector 34b may apply a different threshold value, so that the resulting binary signal can be used to trigger different functions, which may be user selected. For example, applying a threshold value that is comparatively low can be used to detect light contact between the sensor and an object, such as may occur when the user's hand is resting on an object such as the surface. This information can be used in various ways, representative examples of which are described below.

Other signal conditioning operations may be performed as desired. For example, FIG. 3c illustrates an arrangement in which a pair of analog pressure sensors are used to implement a scroll sensor 14. In this case, the analog pressure sensors are positioned adjacent one another so that a user's digit (eg the thumb) can apply pressure to both sensors simultaneously. The respective analog signals output by the pressure sensors are then supplied to a differential circuit 36 of the signal conditioner 26, which outputs a signal representative of the difference between the respective pressures measured by the pressure sensors. An amplitude-frequency converter 38 then processes this signal to generate a digital pulse train the frequency of which is proportional to the absolute magnitude of the measured pressure difference, and a one-bit value indicative of the sign (positive or negative) of the pressure difference. These signals can then be supplied to the transmitter 28 and transmitted to the computer 32, and subsequently used to control both the speed and direction of the scroll function. With this arrangement, the user can control the scroll function of the computer by adjusting the position of their digit on the scroll sensor 14. As may be appreciated, the differential circuit 36 and amplitude-frequency converter 38 may be provided using known analog and/or digital signal processing techniques, as desired.

The transmitter 28 operates under the control of the controller 30 to selectively transmit signals from the signal conditioner 26 to the computer 32. In some embodiments, the signals are transmitted through a wireless connection, for example using a known radio frequency (RF) or Infra-Red (IR) communications protocol. In other embodiments, a cable connection may be provided between the transmitter and a suitable port (e.g. a Universal Serial Bus, USB, port) of the computer. As is known in the art, use of a wireless transmitter provides increased freedom of movement of the user, whereas a cable connection typically offers superior performance.

The controller 30 may be provided as any suitable combination of hardware and software for controlling the transmitter 28 to selectively transmit signals to the computer 32. For example, as noted above, it is contemplated that the user may wish to perform various activities without removing the wearable data input device 2 from their hand. Thus at a minimum, the controller 30 implements a switching function to switch between an "transmit" mode in which sensor signals are transmitted to the computer 32; and a "idle" mode, in which sensor signals are not transmitted to the computer 32.

In US 2003/0137489 A1 this switching function is responsive to an On/Off switch provided on the wearable data input device. In some cases, this On/Off switch may be configured as a contact sensor positioned in association with the surface movements sensor. With this arrangement, when the surface movement sensor is in a position to detect motion relative to a surface, the On/Off switch (contact sensor) causes the controller to switch to the "transmit" mode to permit mouse-like data input to the computer. Conversely, when the surface movement sensor is not in a position to detect motion relative to a surface, this condition is detected by the On/Off switch (contact sensor), and the controller responds by switching to the "idle" mode to prevent spurious signals from being transmitted to the computer. This arrangement is particularly suited to embodiments in which the surface movement sensor is designed to operate in direct contact with the surface (such as a tracker-ball) or in very close proximity to it (such as an optical tracking sensor).

However, in some embodiments, this arrangement may be inconvenient, for example where the presence of the surface movement sensor and an associated contact sensor would interfere with the user's ability to close their hand (and so grasp an object) while wearing the data input device, or where the surface movement sensor is provided as an accelerometer disposed within the body of the consol 18.

This difficulty can be overcome by using the various sensors, in combination, to detect when the user's hand is in a position which permits mouse-like data input to the computer. For example, FIG. 3b discussed above shows an arrangement in which a digital sensor signal indicative of light pressure on a contact sensor 12 is provided to the controller 30. Typically, when the user's hand is properly positioned relative to a surface for 2-dimentional mouse-like operation , at least two (and frequently more) portions of their hand will be in contact with that surface, and this contact can be detected by contact sensors 12 of the wearable data input device 2, using, for example, the threshold detector arrangement of FIG. 3b. Thus, for example, the controller 30 may implement an algorithm in which the "transmit" mode is selected if "surface contact" is detected by two or more contact sensors 12, and the "idle" mode is selected otherwise.

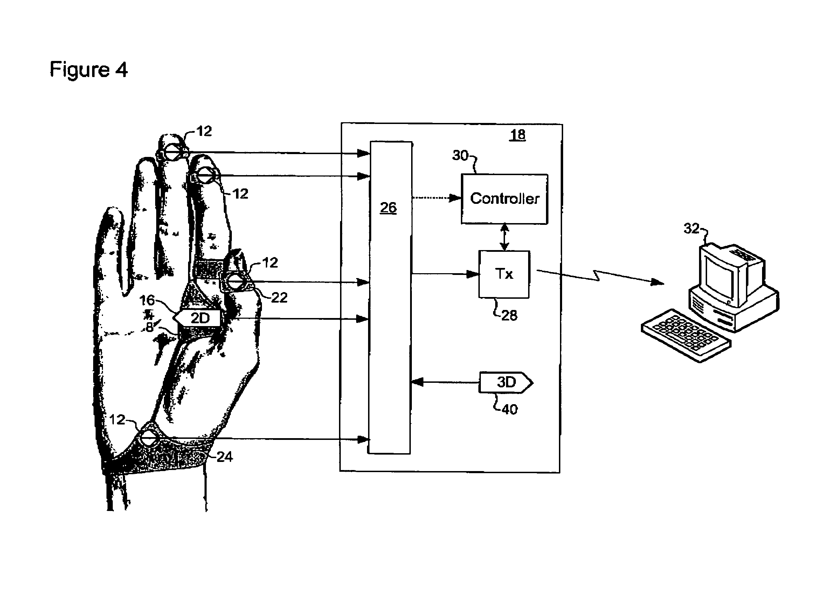

FIG. 4 illustrates an embodiment of the wearable data input device 2 which incorporates a motion sensor 40 for detecting 3-dimentional (3D) motion of the user's hand. In the embodiment of FIG. 4, the motion sensor 40 is incorporated within the body of the consol 18, but this is not essential. Preferably, the motion sensor 40 is provided as an integrated element such as a Micro-Electro-Mechanical (MEMs) integrated circuit (IC). In some embodiments, a 6-axis accelerometer is used, which is capable of detecting linear motion along three orthogonal coordinate axies, as well as rotations about these axies. Known 6-axis accelerometer integrated circuit devices may be used for this purpose. Use of a 6-axis accelerometer is beneficial in that it enables the controller and/or the computer to determine both the location and attitude of the user's hand in a 3-dimensional coordinate frame. This information may be used, for example, to control a cursor (or point of focus) in 3-dimensional computing environments.

In the embodiment of FIG. 4, the controller preferably implements a three-way switching function between an "idle" mode in which no signals are transmitted to the computer; a 2D mode in which signals corresponding to conventional 2-dimensional mouse operation are transmitted to the computer; and a 3D mode in which signals corresponding to a 3-dimensional mouse-like operation are transmitted to the computer.

In some embodiments, selection of the 2D and 3D modes can be based on detection that the user's hand is positioned to facilitate signal generation and data input for that mode. In such cases, the "idle" mode may be treated as a default to which the controller automatically reverts when neither of the 2D and 3D modes apply. This arrangement is beneficial in that it provides a mechanism by which the controller will switch to the "idle" mode to prevent spurious signal transmissions when the user is performing some action other than data input, and when the user is moving their hand between a surface (for 2D mouse-like operation) and a region of space for 3D mouse-like operation. As may be appreciated, the 2D mode can be selected in response to detection that the user's hand is in a position which permits 2-dimensional mouse-like data input to the computer. If desired, this may be accomplished using the methods described above with reference to FIG. 2, for selection of the "transmit" mode.

In simple embodiments, the 3D mode can be selected based on a location of the user's hand relative to a predetermined region of space. For example, consider a scenario in which the computer maintains a 3-dimensional virtual environment, which is rendered for display to the user as a 3D image occupying a volume of space within the user's visual field. The boundaries of this image volume can be defined in various ways. For example, during a set-up operation the user may move their hand to a selected location, and then press a predetermined contact sensor, which triggers the controller 30 to record data indicative of the location of the boundary in memory. Once these boundaries have been defined, the motion signals generated by the 3D motion sensor can be used to detect when the user's hand crosses a boundary and enters or leave the image volume. When the user's hand enters the 3D image volume, the controller 30 switches to the 3D mode, and conversely switches to the idle mode when the user's hand leaves the 3D image volume.

A difficulty with this operation is illustrated by the following scenario. Consider a situation in which the wearable data input device is operating in the 3D mode, and the user has moved the cursor (or point of focus) to a desired object in a 3-dimensional virtual space maintained by the computer. At this point, the user wishes to switch to 2D mode, so as to manipulate that object using 2-dimensional mouse-like operations. In this situation, there is a problem in that lowering the user's hand toward a surface (to switch to 2D mode) will be detected and translated into corresponding undesired movement of the cursor (or point of focus) in the 3-dimensional virtual space. Thus it is necessary for the controller to control the 3D mode of operation in such a way as to avoid this un-wanted cursor movement.

One method of accomplishing this is to provide a sensor on the garment, which is configured to operate as a toggle-switch configured to alternately cause the controller to select and de-select the 3D mode. Such a toggle-switch operation could be provided by various means including, but not limited to: one or more contact sensors; a sensor configured to detect bending of a digit of the user's hand; and an accelerometer coupled to signal processing circuitry configured to detect a predetermined movement or gesture of the user's hand. If desired, a contact sensor may be positioned so that it can be activated by the user pressing their thumb against their index finger, for example. With this arrangement, the user can manually force the controller to select/de-select the 3D mode at a timing of their choosing.

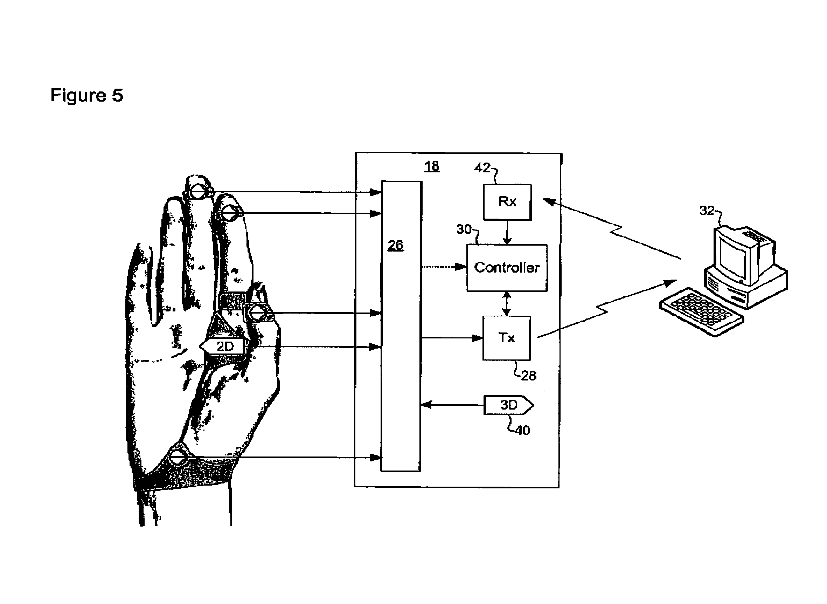

FIG. 5 illustrates an alternative embodiment, in which the consol 18 includes a receiver 42 for receiving signals from the computer 32. If desired, the receiver 42 may be integrated with the transmitter 28 into a single device. As is known in the art, cable and wireless communications protocols commonly used for communication between a computer and peripheral devices support bidirectional data transmission. In the case of mouse-like data input devices, only the up-link path is normally used, to convey signals from the mouse to the computer. Typically, the downlink path, from the computer to the data input device, is not used.

The embodiment of FIG. 5 exploits the (normally unused) down-link path to enable context-appropriate operation of the wearable data input device 2. Thus, for example, the 3-dimensional virtual environment maintained by the computer will normally contain a plurality of objects. Some of these objects (such as, for example, word processor or spread-sheet application windows, or the surface of a modelled 3-D object) have a 2-dimentional context or aspect; while other objects have a 3-dimensional context or aspect. In such cases, when the user (operating in the 3-dimensional virtual space) selects an object having a 2-dimentional context, the computer moves the focus to that object, and sends a corresponding command to the controller to switch out of the 3D mode to prevent unwanted movement of the cursor while the user moves their hand to a surface to begin 2D mouse-like operation (or to a keyboard or other peripheral device). The timing at which the controller 30 actually switches to the 2D mode, and begins transmitting 2D mouse-like signals may be driven by the methods described above. Conversely, when the user closes a 2-dimensional context object, the computer moves the focus away from that object, and sends a corresponding command to the controller 30. Following receipt of this command from the computer, the controller 30 can switch to the 3D mode of operation, either immediately or after some delay. If desired, the delay may simply be to wait until the user raises their hand off the surface, which would normally trigger the controller to switch out of the 2D mode (and into the idle mode). If desired, the controller 30 may implement a further delay period (of, for example about 500 milli-seconds), so that the wearable data input device remains in the idle mode while the user is raising their hand into position for continued operation in the 3D mode.

In some embodiments, the motion sensor 40 may be used to generate sensor signals corresponding to both 2D and 3D movements of the user's hand. In such cases, switching between 2D and 3D modes of operation is accomplished by suitable selection of the signals to be transmitted to the computer 32. For example, for the 2D mode of operation, the controller 30 may control the transmitter 28 to transmit only those signals indicative of movements along X and Y axies, while blocking transmission of signals indicative of either Z-axis movement or rotations about the three axies.

In the embodiments described above, the wearable data input device 2 is provided with a plurality of sensors, including contact sensors 12 for detecting contact with a surface, a surface movement sensor 16 for detecting 2-dimensional movement relative to a planar surface, a scroll sensor 14, and a motion sensor 40 for detecting 3-dimensional motion. However, it will be appreciated that other types of sensors may also be used, as desired. For example, one or more sensors may be mounted on each digit portion of the garment, and configured to detect a position of a corresponding digit of the user's hand (relative to the consol, for example). With this arrangement, data input signals indicating whether the user's hand is opened or closed, for example, can be sent to the computer. In another example, a microphone may be incorporated into the console 18 to detect sounds, which may then be transmitted to the computer. Other sensor arrangements will become apparent to those skilled in the art, and can be incorporated into the wearable data input device of the present invention, without departing from the intended scope of the appended claims.

Those or ordinary skill in the art will appreciate that other devices may also be incorporated into the wearable data input device 2. For example, a speaker may be incorporated into the console 18, and configured to enunciate audio signals transmitted to the wearable data input device 2 from the computer 32. Similarly, a display screen may be incorporated into the console 18, and

## Claims

1. A wearable data input device comprising:
a garment to be worn on a user's hand, the garment including: at least one digit portion for receiving a corresponding digit of the user's hand; a palmar portion; and a dorsal portion;
at least one contact sensor disposed on the garment, each contact sensor configured to detect contact between a corresponding portion of the user's hand and another object, and to generate contact signals in accordance with the detected contact;
a surface movement sensor to detect 2-dimensional (2-D) movement of the user's hand across a surface, and to generate corresponding 2-D movement signals in accordance with the detected movement; and
a consol disposed on the garment, the consol being configured to receive signals from each sensor, and to selectively transmit the received signals to a computer;
wherein at least the consol is selectively removable from the garment.

2. The wearable data input device as claimed in claim 1, wherein the surface movement sensor is selectively removable from the garment, and, preferably, further comprising:
a first fitting affixed to the garment for removably receiving the consol;
a second fitting affixed to the garment for removably receiving the surface movement sensor; and
at least one electrical conductor affixed to the garment for electrically connecting the first and second fittings,
wherein the device preferably comprises a plurality of second fittings such that a user can affix the surface movement sensor to the garment at any one of a plurality of user-selected locations, each second fitting being connected to the first fitting by at least one respective electrical conductor.

3. The wearable data input device as claimed in claim 1 or 2, wherein the at least one contact sensor comprises at least one contact sensor disposed on each digit portion of the garment, and/or
wherein the at least one contact sensor includes at least one contact sensor disposed on the palmar portion of the garment, and/or
wherein at least one of the contact sensors is non-removably affixed to the garment.

4. The wearable data input device as claimed in any one of the preceding claims, wherein at least one of the contact sensors is selectively removable from the garment, wherein the device preferably further comprises:
a plurality of third fittings affixed to the garment, each third fitting for removably receiving a respective contact sensor, such that a user can affix contact sensors to the garment at any one or more of a plurality of user-selected locations; and
respective electrical conductors affixed to the garment for electrically connecting the console to each one of the third fittings,
wherein preferably each third fitting is individually addressable, such that a response of a computer to a contact signal generated by a contact sensor affixed to any given third fitting is user-programmable.

5. The wearable data input device as claimed in any one of the preceding claims, wherein the consol comprises:
a transmitter for transmitting signals to the computer; and
a controller configured to:
detect when the user's hand is positioned to enable detection of 2-D movement across the surface by the surface movement sensor, and control the transmitter to transmit the 2-D movement signals to the computer; and
otherwise, control the transmitter to transmit no signals to the computer.

6. The wearable data input device as claimed in claim 5, wherein the transmitter is configured to transmit signals to the computer via a wireless connection or a cable connection,
wherein, preferably the controller is responsive to a first switch signal to detect when the user's hand is positioned to enable detection of 2-D movement across the surface,
wherein, preferably, the first switch signal is generated by a contact sensor associated with the surface movement sensor, and configured to detect contact between the surface movement sensor and the surface, or the first switch signal is generated by a processor for deriving the first switch signal from respective outputs of the surface movement sensor and at least one other contact sensor of the wearable data input device.

7. The wearable data input device as claimed any one of the preceding claims, further comprising at least one motion sensor for detecting 3-dimensional (3-D) motion of the user's hand, and for generating 3-D motion signals in accordance with the detected motion,
wherein, preferably, the motion sensor comprises a 6-axis accelerometer, and wherein the 3-D motion signals contain information of measured motion and attitude of the of the user's hand, and/or
wherein, preferably the motion sensor is disposed in the consol.

8. The wearable data input device as claimed in claim 7, wherein the consol comprises:
a transmitter for transmitting signals to the computer; and
a controller configured to:
detect when the user's hand is positioned to enable detection of 2-D movement across the surface by the surface movement sensor, and control the transmitter to transmit the 2-D movement signals to the computer;
detect when the user's hand is positioned for controlling a cursor in a 3-D coordinate system, and control the transmitter to transmit the 3-D motion signals to the computer; and
otherwise, control the transmitter to transmit no signals to the computer.

9. The wearable data input device as claimed in claim 8, wherein the controller is responsive to a first switch signal to detect when the user's hand is positioned to enable detection of 2-D movement across the surface and the controller is responsive to a second switch signal to detect when the user's hand is positioned for controlling a cursor in a 3-D coordinate system.

10. A wearable data input device comprising:
a garment to be worn on a user's hand, the garment including: at least one digit portion for receiving a corresponding digit of the user's hand; a palmar portion; and a dorsal portion;
at least one contact sensor disposed on the garment, each contact sensor configured to detect contact between a corresponding portion of the user's hand and another object, and to generate contact signals in accordance with the detected contact;
a surface movement sensor disposed on the garment, to detect 2-dimensional (2-D) movement of the user's hand across a surface, and to generate corresponding 2-D movement signals in accordance with the detected movement;
at least one motion sensor for detecting 3-dimensional (3-D) motion of the user's hand, and for generating 3-D motion signals in accordance with the detected motion; and
a consol configured to receive signals from each sensor, and to selectively transmit the received signals to a computer.

11. The wearable data input device as claimed in claim 10, wherein the at least one contact sensor comprises at least one contact sensor disposed on each digit portion of the garment, and/or
wherein the motion sensor comprises a 6-axis accelerometer, and wherein the 3-D motion signals contain information of measured motion and attitude of the of the user's hand, and/or
wherein the motion sensor is disposed in the consol, and/or
wherein the consol is selectively removable from the garment.

12. The wearable data input device as claimed in claim 10 or 11, wherein the consol comprises;
a transmitter for transmitting signals to the computer; and
a controller configured to;
detect when the user's hand is positioned to enable detection of 2-D movement across the surface by the surface movement sensor, and control the transmitter to transmit the 2-D movement signals to the computer;
detect when the user's hand is positioned for controlling a cursor in a 3-D coordinate system, and control the transmitter to transmit the 3-D motion signals to the computer; and
otherwise, control the transmitter to transmit no signals to the computer.

13. The wearable data input device as claimed in claim 10, 11 or 12, wherein the surface movement sensor is selectively removable from the garment, and, preferably, further comprising:
a first fitting affixed to the garment for removably receiving the consol;
a second fitting affixed to the garment for removably receiving the surface movement sensor; and
at least one electrical conductor affixed to the garment for electrically connecting the first and second fittings,
wherein the device preferably comprises a plurality of second fittings such that a user can affix the surface movement sensor to the garment at any one of a plurality of user-selected locations, each second fitting being connected to the first fitting by at least one respective electrical conductor.

14. A wearable data input device comprising:
a garment to be worn on a user's hand, the garment including: at least one digit portion for receiving a corresponding digit of the user's hand; a palmar portion; and a dorsal portion;
at least one contact sensor disposed on the garment, each contact sensor configured to detect contact between a corresponding portion of the user's hand and another object, and to generate contact signals in accordance with the detected contact;
a motion sensor for detecting 3-dimensional (3-D) motion of the user's hand,
and for generating motion signals in accordance with the detected motion; and
a consol configured to receive signals from each sensor, and to selectively transmit the received signals to a computer;
wherein the consol is operative in a 2D mode to process the motion signals from the motion sensor to derive 2-dimensional movement signals representative of 2-dimensional movement of the user's hand relative to a surface, and to transmit the derived 2-D movement signals.

15. The wearable data input device as claimed in claim 14, wherein the at least one contact sensor comprises at least one contact sensor disposed on each digit portion of on the garment, and/or
wherein the motion sensor comprises a 6-axis accelerometer, and wherein the motion signals contain information of measured motion and attitude of the of the user's hand, and/or
wherein the motion sensor is disposed in the consol, and/or
wherein the consol comprises:
a transmitter for transmitting signals to the computer; and
a controller configured to:
detect when the user's hand is positioned to enable detection of 2-dimentional movement, and control the transmitter to transmit the 2-D movement signals to the computer;
detect when the user's hand is positioned for controlling a cursor in a 3-D coordinate system, and control the transmitter to transmit the 3-D motion signals to the computer; and
otherwise, control the transmitter to transmit no signals to the computer, and/or
wherein the consol is selectively removable from the garment.
